Europäisches Patentamt

European Patent Office

Office européen des brevets

(19)

(11) **EP 0 340 557 B1**

(12) **EUROPÄISCHE PATENTSCHRIFT**

(45) Veröffentlichungstag und Bekanntmachung des Hinweises auf die Patenterteilung:
**10.07.1996 Patentblatt 1996/28**

(51) Int Cl.⁶: **G02B 6/18**, G02B 6/16

(21) Anmeldenummer: **89107182.1**

(22) Anmeldetag: **21.04.1989**

(54) **Lichtwellenleiter**

Light guide

Guide de lumière

(84) Benannte Vertragsstaaten:
**AT BE CH DE ES FR GB IT LI LU NL SE**

(30) Priorität: **28.04.1988 DE 3814296**

(43) Veröffentlichungstag der Anmeldung:
**08.11.1989 Patentblatt 1989/45**

(73) Patentinhaber: **HOECHST AKTIENGESELLSCHAFT D-65926 Frankfurt am Main (DE)**

(72) Erfinder:
• **Herbrechtsmeier, Peter, Dr.
D-6240 Königstein/Taunus (DE)**

• **Wieners, Gerhard, Dr.
D-6000 Frankfurt am Main (DE)**
• **Kuhls, Jürgen, Dr.
D-8263 Burghausen (DE)**
• **Tschacher, Manfred
D-8261 Emmerting (DE)**
• **Fitz, Herbert, Dr.
D-8269 Burgkirchen (DE)**

(56) Entgegenhaltungen:
**EP-A- 0 097 325        EP-A- 0 230 520
EP-A- 0 246 552        DE-A- 2 455 265
US-A- 2 968 649        US-A- 4 568 146
US-A- 4 681 400**

**Beschreibung**

Die Erfindung bezieht sich auf Lichtwellenleiter (LWL), welche sich für die Übertragung von Licht, beispielsweise von Lichtsignalen für die Datenübertragung, eignen.

Die Lichtwellenleiter bestehen aus einem Kern und einem Mantel, die beide aus (unterschiedlichen) transparenten Materialien bestehen, wobei das Kernmaterial immer einen um mindestens ein Prozent höheren Brechungsindex aufweist als das Mantelmaterial. Der Lichtwellenleiter ist im Allgemeinen fadenförmig und weist einen kreisförmigen Querschnitt auf. Ein Mantelmaterial ist mit ringförmigen Querschnitt in einer dünnen Schicht auf den fadenförmigen Kern aufgetragen.

Die bisher für Lichtwellenleiter am häufigsten eingesetzten Materialien sind Homo- und Copolymere von Methacrylsäureestern im Kern und Homo- und Copolymere von Methacrylsäureestern fluorhaltiger Alkohole oder Copolymere des Vinylidenfluorids mit anderen fluorhaltigen Monomeren im Mantel.

Bekannt ist, daß fluorhaltige Polymere, die im Wesentlichen aus Vinylidenfluorid (VdF), Tetrafluorethylen (TFE) und/oder Hexafluorpropen (HFP) bestehen, als Mantelmaterialien für Lichtwellenleiter eingesetzt wurden, die als Kernmaterial Homo- und Copolymere aus Methylmethacrylat (MMA), Styrol und Methacrylsäureestern aliphatischer Alkohole enthalten (EP-A 154 339, EP-A 97 325, DE-A 24 55 265). Die fluorhaltigen Mantelmaterialien neigen dazu, sich durch Kristallisation der VdF- und TFE-Anteile zu trüben. Andererseits können solche Polymere, besonders solche mit hohen HFP-Anteilen, klebrig und damit ungeeignet als LWL-Mantelmaterial oder sie haften schlecht auf dem Kernmaterial, insbesondere wenn der VdF-Anteil niedrig gewählt wurde. Copolymere mit hohen TFE-Anteilen lassen sich schlecht thermoplastisch zu einem LWL-Mantel verarbeiten.

Die US-A-4 568 146 beschreibt einen Lichtwellenleiter mit Kern/Mantel-Struktur mit einem Kern aus einem amorphen Polymer, welches einen Weichmacher enthält und einem Mantel bestehend aus einem Polymer, das Einheiten enthält, die sich von Vinylidenfluorid, Tetrafluorethylen und Hexafluorpropylen ableiten. Die Herstellung von Fasern ohne Verwendung eines Weichmachers führt zu erheblichen Verschlechterungen der mechanischen Eigenschaften, des Temperaturverhaltens und der Transmissionswerte.

Bekannt ist ferner, daß sich die Dauergebrauchstemperatur von Lichtwellenleitern verbessern läßt, wenn man den Kern und/oder den Mantel des Lichtwellenleiters nach der Herstellung desselben gegebenenfalls unter dem Einfluß ionisierender Strahlung mit Hilfe von polyfunktionellen Vinylverbindungen oder von glycidylgruppenhaltigen Hilfsstoffen vernetzt (EP-A 171294). Unvollständig umgesetzte Vinylverbindungen können allerdings die Eigenschaften des Lichtwellenleiters bei längerem Gebrauch verschlechtern, während Glycidylgruppen die Wasseraufnahmefähigkeit der Kernmaterialien erhöhen.

Bekannt ist außerdem, daß die Dauergebrauchstemperatur von Lichtwellenleitern, deren Kern oder Mantel aus einem geeigneten Polymeren besteht, durch Behandlung mit ionisierender Strahlung erhöht werden kann (JP 61/35404).

Es ist jedoch schon seit langem bekannt, daß Polymere, die MMA enthalten, sich unter dem Einfluß ionisierender Strahlen gelbbraun verfärben und abgebaut werden. Dadurch wird die Transparenz des Kernmaterials beeinträchtigt und die mechanischen Eigenschaften der Lichtwellenleiter verschlechtern sich.

Desweiteren ist bekannt, daß Quarzglas-Lichtwellenleiter mit Schutzummantelungen aus Polymeren mit β-Strahlen geringer Energie behandelt wurden mit dem Ziel, diese Polymeren zu vernetzen, dabei aber Veränderungen des Glases zu vermeiden, die bei Bestrahlung mit energiereichen β-Strahlen auftreten (EP-A 145 379) und zu einer geringeren Lichttransmission führen.

Ebenso ist bekannt, daß Schläuche aus fluorhaltigen Polymeren, die VdF, TFE und HFP enthalten und die mit einer klaren transparenten Flüssigkeit gefüllt wurden, als Lichtwellenleiter benutzt werden können (EP-A 246 552).

Schließlich ist bekannt, daß man Polymere, die VdF enthalten, durch Umsetzung des Polymeren mit der Verbindung Dimethylmethoxyvinylsilan und unter Einwirkung von Wasser nach der thermoplastischen Verarbeitung vernetzen kann (DE-A 33 27 596).

Aufgabe war die Bereitstellung eines hochtransparenten Polymermaterials aus leicht zugänglichen Monomeren zur Herstellung des Mantels von Lichtwellenleitern, die für Übertragungslängen von 10 bis 100 Metern geeignet sind und die auch bei einer Temperatur über 100°C ohne wesentliche Einschränkung der Übertragungslänge verwendet werden können.

Es wurde nun gefunden, daß ein Lichtwellenleiter, dessen Mantel aus einer transparenten thermoplastischen Formmasse, welche sich von den Monomeren Vinylidenfluorid, Tetrafluorethylen und Hexafluorpropylen ableitet, diese Aufgabe zu lösen vermag.

Somit betrifft die Erfindung einen Lichtwellenleiter mit Kern/Mantel-Struktur, dessen Kern aus einem Polymer mit einem Brechungsindex n(K) und dessen Mantel aus einem Polymeren mit einem Brechungsindex n(M) besteht, wobei n(K)/n(M) > 1,01 ist, der Kern aus einem Polycarbonat oder aus einem Polymer besteht, welches Einheiten enthält, die sich von einem Acrylat, einem Methacrylat oder einem Fluoracrylat ableiten, und der Mantel aus einem Polymer besteht, welches Einheiten enthält, die sich, jeweils bezogen auf das Polymer, zu 30 bis 50 Gew.-% vom Vinylidenfluorid, zu 25 bis 55 Gew.-% vom Tetrafluorethylen und zu 15 bis 25 Gew.-% vom Hexafluorpropylen ableiten.

Die Erfindung betrifft weiterhin ein Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) >1,01 ist, durch Extrusion des Kerns und Umgeben des Kerns mit einem Mantel, der Kern aus einem Polycarbonat oder aus einem Polymer extrudiert wird, welches Einheiten enthält, die sich von einem Acrylat, einem Methacrylat oder einem Fluoracrylat ableiten, und mit einem Mantel aus einem Polymer umgeben wird, welches Einheiten enthält, die sich, jeweils bezogen auf das Polymer, zu 30 bis 50 Gew.-% vom Vinylidenfluorid, zu 25 bis 55 Gew.-% vom Tetrafluorethylen und zu 15 bis 25 Gew.-% vom Hexafluorpropylen ableiten.

Der Kern des erfindungsgemäßen Lichtwellenleiters besteht aus einem Polycarbonat oder aus einem Polymer, welches Einheiten enthält, die sich von einem Acrylat, einem Methacrylat oder einem Fluoracrylat ableiten. Bevorzugt werden solche Polymere verwendet, die einen höheren Glaspunkt als PMMA aufweisen, wodurch die Dauergebrauchstemperatur der Lichtwellenleiter weiter gesteigert werden kann. Dazu gehören Polymere aus α-Fluoracrylsäuremethylester (FA-M), aus α-Fluoracrylsäureestern, Methacrylsäureestern und Acrylsäureestern halogenierter Phenole, mono- und bicyclischer Alkohole und halogenierter offenkettiger, alicyclischer und bicyclischer Alkohole und Copolymere dieser Verbindungen untereinander oder mit MMA, α-Fluoracrylsäurehexafluorisopropylester oder anderen α-Fluoracrylsäureestern und Methacrylsäureestern, die aliphatische oder fluorierte aliphatische Alkoholkomponenten enthalten, sowie Polycarbonate. Besonders bevorzugt werden Polymere, die im wesentlichen aus α-Fluoracrylsäuremethylester, aus α-Fluoracrylsäureestern, Methacrylsäureestern und Acrylsäureestern drei-, vier- und fünffach fluorierter, chlorierter und bromierter Phenole, des 1,4,5,6,7,7-Hexachlor- und Hexabrombicyclo-(2.2.1)-hept-5-en-2-ols, des 1,4,5,6,7-Pentachlor- und des 1,4,5,6-Tetrachlorbicyclo-(2.2.1)-hept-5-en-2-ols, α-Fluoracrylsäure- und Methacrylsäureestern des Cyclohexanols, des 3,3,5-Trimethylcyclohexanols, des 2-Methylcyclopentanols, des Borneols, des Isoborneols, des Norborneols bestehen, sowie Polycarbonat. Besonders bevorzugt sind Polymere, die im wesentlichen aus Acrylsäure- und Methacrylsäurepentachlorphenylester (MA-PCP), Methacrylsäurenorbornylester und aus Methacrylsäure-1,4,5,6,7,7-hexachlorbicyclo-(2.2.1)-hept-5-en-2-ylester, bestehen, sowie Polycarbonat.

Der Mantel des erfindungsgemäßen Lichtwellenleiters besteht aus einem Polymer, welches Einheiten enthält, die sich vom Vinylidenfluorid (VdF), vom Tetrafluorethylen (TFE) und vom Hexafluorpropylen (HFP) ableiten. Die Anteile dieser Einheiten am Polymer betragen

VdF 30 bis 50, vorzugsweise 35 bis 45 Gew.-%,
TFE 25 bis 55, vorzugsweise 35 bis 45 Gew.-% und
HFP 15 bis 25, vorzugsweise 17 bis 22 Gew.-%,

jeweils bezogen auf die Gesamtmenge des Polymeren.

Der erfindungsgemäße Lichtwellenleiter wird nach einem der nachstehenden Verfahren hergestellt:

1. Der Lichtwellenleiter wird durch gleichzeitige Extrusion des Kern- und des Mantelmaterials (Coextrusion) mit Hilfe einer Bikomponentendüse hergestellt. Falls erwünscht, kann anschließend an dieses Verfahren der Lichtwellenleiter der Wirkung ionisierender Strahlung ausgesetzt werden.

2. Man stellt zunächst den Kernfaden durch Extrusion her. Danach trägt man das Mantelmaterial entweder in Form einer Mischung des Mantelmaterials mit einem flüchtigen Lösemittel unter Verdampfung des Lösemittels oder durch Extrusion des Mantelmaterials mit Hilfe eines Extruders, der für die Umhüllung von Drähten ausgerüstet wurde, auf. Im Falle der Lösemittelbeschichtung kann das Lösemittel entweder geeignet sein zur Herstellung einer homogenen Lösung des Mantelpolymeren oder zur Herstellung einer Dispersion oder einer Emulsion des Mantelpolymeren. Bei diesem Verfahren kann eine selektive Vernetzung des Kernmaterials durch ionisierende Strahlung nach der Extrusion des Kernmaterials und vor der Beschichtung mit dem Mantelmaterial vorgenommen werden.

3. Statt des vinylidenfluoridhaltigen Copolymeren kann ein durch Trimethyloxyvinylsilan-Pfropfung modifiziertes und mit Umsilylierungskatalysatoren vermischtes Vinylidenfluorid-Copolymeres im Mantel eines Lichtwellenleiters eingesetzt werden. Dabei können entweder Kern und Mantel gleichzeitig in einer Bikomponentendüse zum Lichtwellenleiter extrudiert oder der Lichtwellenleiterkern kann nachträglich mit einem Mantel versehen werden. Eine Vernetzung des silanmodifizierten Vinylidenfluorid-Copolymeren tritt bei diesem Verfahren in wasserdampfhaltiger Atmosphäre spontan ein.

4. Das Fluorpolymere oder silanmodifizierte Fluorpolymere wird zu einem Schlauch verarbeitet, anschließend vernetzt, mit dem Präpolymerisat eines aushärtbaren Harzes gefüllt und das Harz zu einer transparenten, blasenfreien Masse mit einem höheren Brechungsindex, als das Fluorpolymere aufweist, ausgehärtet.

Der erfindungsgemäße Lichtwellenleiter mit einem fluorhaltigen Polymeren aus VdF, TFE und HFP als Mantelmaterial und PMMA als Kernmaterial ist im Temperaturbereich bei und unter 70°C über Stunden einsetzbar, ohne an Lichtdurchlässigkeit zu verlieren. Die Dauergebrauchstemperatur eines solchen Lichtwellenleiters läßt sich noch verbessern, wenn man das Mantelmaterial des Lichtwellenleiters vernetzt. So kann man vorteilhafterweise das Copolymere aus VdF, TFE und HFP vor der Lichtwellenleiter-Herstellung mit Dimethylmethoxyvinylsilan umsetzen, mit einem Katalysator für die Umsilylierung verkneten und dieses Gemisch zum Mantel eines Lichtwellenleiters verarbeiten. Das Mantelmaterial dieses Lichtwellenleiters reagiert an feuchter Luft unter Vernetzung.

Die Dauergebrauchstemperatur dieser Lichtwellenleiter läßt sich auch dadurch erhöhen, daß man den Lichtwellenleiter ionisierender Strahlung ausgesetzt, wobei Copolymere aus VdF, TFE und HFP in Gewichtsverhältnissen zwischen (30 bis 50 %) : (25 bis 55 %) : (15 bis 25 %) durch ionisierende Strahlen besonders wirksam vernetzt werden. Die vernetzende Wirkung der ionisierenden Strahlung ist besonders hoch, wenn die eingesetzten Copolymere die Monomeren VdF, TFE und HFP in Gewichtsverhältnissen zwischen (35 bis 45 %) : (35 bis 45 %) : (17 bis 22 %) enthalten. Bei der Verwendung von Copolymeren dieser Zusammensetzung kann die Vernetzung unter Einwirkung besonders niedriger Strahlendosen erfolgen.

Der erfindungsgemäße Lichtwellenleiter weist eine hervorragende Lichtdurchlässigkeit auf, sofern bei der Herstellung der Polymermaterialien und des Lichtwellenleiters alle partikelartig-festen und löslichen Verunreinigungen sorgfältig entfernt und ausgeschlossen werden. Die Lichtdurchlässigkeit einer solchen Faser wird im allgemeinen durch die zur Lichtdurchlässigkeit reziproke Größe der Dämpfung D gemäß der Formel

$$D = 10 \cdot \log (I/I_0)/l,$$

in der Einheit dB/km ausgedrückt. In der Formel bedeutet I die Intensität des Lichts am Ende des Lichtwellenleiters, $I_0$ die Intensität am Anfang des Lichtwellenleiters, l die Lange des Lichtwellenleiters in km.

Ein Lichtwellenleiter, der aus den angegebenen Materialien nach dem erfindungsgemäßen Verfahren hergestellt und dessen Mantelmaterial mit Hilfe eines der beschriebenen Verfahren vernetzt wurde, weist zugleich eine niedrige Lichtdämpfung, eine hohe Dauergebrauchstemperatur und gute mechanische Eigenschaften auf.

Die Erfindung wird anhand der folgenden Beispiele näher erläutert. Dabei wurde die Dämpfung eines Lichtwellenleiters auf die folgende Art und Weise bestimmt:

In ein Ende eines 10 bis 30 m langen Lichtleitfadens wurde mit Hilfe einer geeigneten Lichtquelle Licht eingekoppelt, während am anderen Ende die Intensität des austretenden Lichts gemessen wurde. Der Lichtleitfaden wurde anschließend jeweils um eine exakt bestimmte Länge von etwa einem Meter gekürzt und die austretende Lichtintensität erneut gemessen. Anhand einer logarithmischen Auftragung der gemessenen Lichtintensitäten gegen die jeweilige Länge des Lichtwellenleiters kann die Dämpfung aus der Steigung bestimmt werden.

Während der Dauer der Messung der Temperaturabhängigkeit der Dämpfung wurden die Verbindungen zwischen Lichtquelle bzw. Lichtdetektor und Lichtwellenleiter nicht verändert, lediglich ein exakt bestimmter Teil des Lichtwellenleiters in einem Klimaschrank im Luftbad auf die Meßtemperatur temperiert. Aus der Abschwächung der Lichtintensität am Ausgang des Lichtwellenleiters und der Länge des temperierten Fadenstücks kann die Änderung der Dämpfung im temperierten Teil des Lichtwellenleiters berechnet werden.

Zur Messung der Flexibilität wurden die Verbindungen zwischen Lichtquelle bzw. Lichtdetektor und dem Lichtwellenleiter nach einer ersten Messung der austretenden Lichtintensität nicht verändert. Ein Teil des Lichtleitfadens in der Mitte der Meßstrecke wurde dreimal um einen zylinderförmigen Stab gewunden, wieder von dem Stab abgewickelt und danach die Intensität des austretenden Lichts gemessen. Hatte die Intensität des Lichts nicht oder nicht wesentlich abgenommen, so wurde der Vorgang an einem Stab eines kleineren Durchmessers wiederholt. Der kleinste Biegeradius, der ohne Verschlechterung der Lichtwellenleiterqualität zugelassen werden kann, ist ein Maß für die Flexibilität des Lichtwellenleiters.

**Beispiel 1**

Zunächst wurde in bekannter Weise ein Copolymeres aus TFE, HFP und VdF in einem Suspensionsverfahren hergestellt. Die wäßrige Flotte enthielt Perfluoroctansäure als Emulgator und Kaliumhydrogensulfat als Puffer. Als Starter diente Ammoniumpersulfat. Polymerisiert wurden 40 Gew.-% TFE, 20 Gew.-% HFP und 40 Gew.-% VdF bei einer Temperatur von 70°C und einem Druck von 9 bar. Als Regler diente Diethylmalonester.

Das Produkt war in Methylethylketon und anderen Lösemitteln löslich. Eine 1-prozentige Lösung in Methylethylketon wies bei 25°C eine reduzierte spezifische Viskosität von 87 cm³/g auf. Mit Hilfe der Gelpermeationschromatographie wurde ein Gewichtsmittelwert der Molmasse von 177 000 bestimmt (Tetrahydrofuran als Lösemittel, gemessen an einer Eichkurve von Polystyrol-Standardpräparaten). Die Zusammensetzung des Polymeren wurde mittels 19-F-NMR-Spektroskopie zu 40 Gew.-Teilen TFE, 20 Teilen HFP und zu 40 Teilen VdF bestimmt. Der Brechungsindex des

Copolymeren betrug $n_D^{25} = 1,36$.

In der DSC waren nur sehr geringe kristalline Anteile zu erkennen.

**Beispiel 2**

100 Gew.-Teile Methylmethacrylat wurde durch Destillation und Filtration durch feinporige Membranfilter von Verunreinigungen befreit, mit 0,1 Teilen Dicumylperoxid und 0,3 Teilen Dodecylmerkaptan versetzt und kontinuierlich in einen auf 100° bis 130°C erhitzten Rührkessel eingespeist. In dem Kessel bildete sich aus dem Monomeren eine sirupartig zähe Masse, die aus Monomerem und Polymerem bestand und die kontinuierlich von dem Kessel in einen Doppelschneckenextruder überführt wurde. Im Doppelschneckenextruder erhöhte sich der Polymeranteil durch fortgesetzte Polymerisation bei 120° bis 170°C auf 80 bis 100 % Umsatz. Überschüssiges freies Monomeres wurde in der Entgasungszone des Extruders im Vakuum abgezogen. Das entstandene Polymere war frei von flüchtigen Bestandteilen und wies einen mittleren Polymerisationsgrad (Gewichtsmittelwert) $P_w = 1100$ auf.

Ein Copolymeres aus VdF, TFE und HFP wurde nach Beispiel 1 hergestellt und in einem Einschneckenextruder aufgeschmolzen. In einer Bikomponenten-Spinndüse wurde das PMMA (mittlerer Polymerisationsgrad $P_w = 1100$) zum Kern, das VdF-Copolymere zum Mantel eines Lichtwellenleiters verarbeitet. Die Arbeitsparameter der Spinnanlage wurden so eingestellt, daß ein Faden von 1 mm Durchmesser mit einer Schichtdicke des Mantelmaterials von 10 μm entstand.

Der Lichtwellenleiter wies bei Zimmertemperatur eine Dämpfung von 250 dB/km bei 650 nm auf. Die Dämpfung stieg bei 70°C geringfügig auf einen Wert von 280 dB/km und nahm erst bei noch höheren Temperaturen stärker zu. Der Wert der Dämpfung blieb unverändert, wenn man den Lichtwellenleiter um einen Stab mit dem Durchmesser 10 mm wand. Die Reißfestigkeit des Fadens betrug bei 25°C 9 cN/tex, bei 100°C 1 cN/tex.

**Vergleichsbeispiele A bis C**

In der Art und Weise, wie im Beispiel 1 angegeben ist, wurden Copolymere hergestellt, deren Zusammensetzungen in Tabelle 1 angegeben sind. Entsprechend Beispiel 2 wurden aus diesen Copolymeren als Mantel- und PMMA als Kernmaterial Lichtwellenleiter hergestellt, deren Eigenschaften gleichfalls in Tabelle 1 aufgeführt sind.

Aus keinem dieser Copolymeren konnten Lichtwellenleiter ausreichend niedriger Dämpfung und Wärmebeständigkeit hergestellt werden.

Tabelle 1

| Vergleichsbeispiel | Zusammensetzung Dämpfung Bemerkungen | | | | |
|---|---|---|---|---|---|
| | VdF | HFP | TFE | (dB/km) | |
| | Gew.-Teile | | | | |
| A | 25 | 20 | 55 | 1200 | leicht trübes Mantelmaterial DSC: kristalline Anteile |
| B | 60 | 20 | 20 | 800 | bei 70°C: 2400 dB/km Das Mantelmaterial ist weich und klebrig |
| C | 35 | 5 | 60 | 1450 | DSC: kristalline Anteile im Mantelmaterial |

**Beispiel 3**

Ein Lichtwellenleiter, der den Angaben in Beispiel 2 entsprechend hergestellt worden war, wurde vor dem Bestrahlungstrichter eines Elektronenbeschleunigers mittels eines Systems von Umlenkrollen so vorbeigeführt, daß er unmittelbar nach der Herstellung in einer evakuierten Kammer jeweils um einen Winkel von 60 Grad versetzt von allen Seiten mit einer Energie von 600 keV und einer Dosis von 200 kGy gleichmäßig in radialer Richtung bestrahlt werden konnte.

Der bestrahlte Lichtwellenleiter wies eine Dämpfung von 260 dB/km bei 650 nm auf. Die Dämpfung blieb bis zu einer Temperatur von 70°C konstant, stieg bei höheren Temperaturen auf 320 dB/km bei 110°C und 650 nm an. Wurde der Lichtwellenleiter wieder abgekühlt, so fielen die Dämpfungswerte wieder auf den Ausgangswert zurück. Die Dämpfung erhöhte sich nicht, nachdem der Lichtwellenleiter um einen Stab des Durchmessers 15 mm gewunden worden war. Die Reißfestigkeit betrug 10 cN/tex bei 25°C. 2 cN/tex bei 100°C.

**Beispiel 4**

In der Art und Weise. wie sie im DBP 3 327 596 beschrieben ist, wurde 100 Gew.-Teile eines Copolymeren, das entsprechend den Angaben im Beispiel 1 hergestellt wurde, mit 4 Gew.-Teilen Dimethylmethoxyvinylsilan in Gegenwart von 0,4 Gew.-Teilen Dicumylperoxid umgesetzt. Das Reaktionsprodukt wurde in einem Einschnecken-Entgasungsextruder von flüchtigen Bestandteilen befreit und mit 0,16 Gew.-Teilen Dibutylzinnlaurat verknetet.

Dieses Gemisch wurde in einer Bikomponenten-Spinnanlage als Mantelmaterial zusammen mit PMMA als Kernmaterial in der Art und Weise, die im Beispiel 2 beschrieben wurde, zu einem Lichtwellenleiter verarbeitet, wobei die Arbeitsparameter der Anlage so eingestellt wurden, daß der Kern einen Durchmesser von 1 mm, der Mantel eine Schichtdicke von 10 µm aufwies.

Der Lichtwellenleiter wurde für 2 Tage einer wasserdampfhaltigen Atmosphäre ausgesetzt. Danach wies der Lichtwellenleiter eine Dämpfung von 380 dB/km bei 650 nm und 25°C, von 385 dB/km bei 70°C und 440 dB/km bei 120°C auf. Die Dämpfung stieg bei 120°C in 24 Stunden auf 460 dB/km, bei Zimmertemperatur betrug die Dämpfung anschließend 405 dB/km.

**Beispiel 5**

Ein Lichtwellenleiter wurde nach den Angaben in Beispiel 2 hergestellt mit der Abweichung, daß die Arbeitsparameter der Spinnanlage so eingestellt wurden, daß ein Lichtwellenleiter von 1 mm Durchmesser mit einer Schichtdicke des Mantelmaterials von 100 µm entstand. Dieser Lichtwellenleiter wurde wie im Beispiel 3 beschrieben mit 200 kGy Elektronenstrahlung einer Energie von 2,8 MeV behandelt.

Die Lichtdämpfung des so hergestellten Lichtwellenleiters betrug bei 25°C und 650 nm 320 dB/km und überstieg auch nach mehrmaligem Erwärmen des Lichtwellenleiters auf 110°C nicht den Wert von 450 dB/km. Der Lichtwellenleiter konnte ohne Erhöhung der Lichtdämpfung um einen Stab von 15 mm Durchmesser gewunden werden. Die Reißfestigkeit betrug bei 25°C 10 cN/tex, bei 120°C 2 cN/tex.

**Beispiel 6**

Acrylsäurepentachlorphenylester (A-PCP) wurde durch wiederholtes Umkristallisieren aus Toluol gereinigt, wobei die Toluollösung vor der letzten Kristallisation des Acrylsäureesters durch Filtration über ein feinporiges Membranfilter von partikelartigen Verunreinigungen befreit wurde.

17 Gew.-Teile MMA, 83 Gew.-Teile A-PCP, 0,1 Gew.-Teile tert.-Butylperoxid und 0,3 Gew.-Teile Dodecylmerkaptan wurden bei 90°C zu einem teils festen, teils flüssigen Brei verrührt und bei dieser Temperatur kontinuierlich in einem Rührkessel eingespeist, der auf eine Arbeitstemperatur von 130°C eingestellt wurde. Das im Kessel entstehende klare, sirupartig zähe Gemisch aus Monomeren und Polymeren wurde kontinuierlich in einen Doppelschneckenentgasungsextruder eingespeist, bei 130° bis 180°C weiter polymerisiert und in einer Entgasungszone im Vakuum von überschüssigen Monomeren befreit. Das Polymere war frei von flüchtigen Bestandteilen und wies einen mittleren Polymerisationsgrad $P_w$ von 900 auf. Die Glasübergangstemperatur des Copolymeren lag bei 150°C (gemessen mittels DSC), der Brechungsindex bei 1,57.

Entsprechend Beispiel 2 wurde aus diesem Copolymeren und dem Copolymeren aus VdF, TFE und HFP nach Beispiel 1 kontinuierlich ein Lichtwellenleiter hergestellt, wobei die Arbeitsparameter der Bikomponenten-Spinnanlage so eingestellt wurden, daß ein Lichtwellenleiter von 0,5 mm Durchmesser mit einer Schichtdicke des Mantelmaterials von 10 µm entstand. Der Lichtwellenleiter wurde mit 200 kGy Elektronenstrahlung von 600 keV behandelt.

Der so hergestellte Lichtwellenleiter wies bei 25°C eine Lichtdämpfung von 1230 dB/km, bei 70°C von 1290 dB/km, bei 150°C von 1350 dB/km bei 650 nm auf. Bei noch höherer Temperatur stieg die Dämpfung rasch auf Werte über 2000 dB/km, gemessen bei 180°C an, fiel jedoch wieder auf 1400 dB/km bei 120°C und 1250 dB/km bei 25°C ab.

Der Lichtwellenleiter wies eine Reißfestigkeit von 5 cN/tex bei 25°C bzw. von 4 cN/tex bei 110°C auf und konnte ohne einen Verlust an Lichtdurchlässigkeit um einen runden Stab mit einem Durchmesser von 25 mm gewunden werden.

**Beispiel 7**

Polycarbonat (Glasübergangstemperatur: 145°C) wurde mittels eines Doppelschneckenentgasungsextruders aufgeschmolzen und als Kern
zusammen mit dem Mantelmaterial, einem Copolymeren aus VdF, TFE und HFP (im Gewichtsverhältnis 43:38:19), in einer Bikomponentendüse zu einem Lichtwellenleiter verarbeitet.

Der Lichtwellenleiter hatte einen Durchmesser von 0,5 mm, der Mantel eine Schichtdicke von 10 µm. Er wurde mit 200 kGy Elektronenstrahlung mit einer Energie von 600 keV behandelt.

Der Lichtwellenleiter wies eine Lichtdämpfung von 980 dB/km bei 25°C, von 1030 dB/km bei 100°C und 1170 dB/km bei 150°C und 650 nm auf. Die Lichtdämpfung stieg zwar beim weiteren Erwärmen auf 180°C
auf über 2000 dB/km an, nach dem Abkühlen wurden die Ausgangswerte jedoch nahezu wieder erreicht (1020 dB/km bei 25°C).

Der Lichtwellenleiter wies eine Reißfestigkeit von 6 cN/tex bei 25°C und von 4 cN/tex bei 120°C auf und konnte ohne einen merklichen Verlust an Lichtdurchlässigkeit um einen runden Stab mit einem Durchmesser von 25 mm gewunden werden.

**Beispiel 8**

In der Art und Weise, die im Beispiel 2 angegeben wurde, wurde ein Lichtwellenleiter hergestellt, wobei anstelle der angegebenen Mischung aus MMA, Dicumylperoxid und Dodecylmerkaptan ein Gemisch aus 30 Gew.-Teilen MMA, 62 Gew.-Teilen Methacrylsäurenorbornylester und 1 Gew.-Teil Acrylsäuremethylester sowie 0,1 Gew.-Teilen tert.-Butylperoxid und 0,3 Gew.-Teilen Dodecylmerkaptan dem Rührkessel bei einer Polymerisationstemperatur von 130°C zugeführt wurde. Das in einem Extruder mit Entgasungszone auspolymerisierte und von flüchtigen Bestandteilen befreite Produkt wies einen Polymerisationsgrad $P_w$ von 850 auf. Die Glasübergangstemperatur wurde mit Hilfe der DSC-Methode zu 151°C bestimmt.

Der Lichtwellenleiter wies einen Durchmesser von 0,5 mm, der Mantel eine Schichtdicke von 10 μm auf. Er wurde mit 200 kGy Elektronenstrahlung von 600 keV behandelt.

Der Lichtwellenleiter zeigte nach 7-tägiger Lagerung an Luft eine Lichtdämpfung von 710 dB/km bei 25°C, von 780 dB/km bei 100°C und 910 dB/km bei 150°C und 650 nm. Die Lichtdämpfung stieg zwar beim weiteren Erwärmen auf 180°C auf über 2000 dB/km an, nach dem Abkühlen wurden die Ausgangswerte jedoch nahezu wieder erreicht (750 dB/km bei 25°C).

Der Lichtwellenleiter wies eine Reißfestigkeit von 6 cN/tex bei 25°C bzw. von 3 cN/tex bei 110°C auf und konnte ohne einen Verlust an Lichtdurchlässigkeit um einen runden Stab mit einem Durchmesser von 25 mm gewunden werden.

**Patentansprüche**

1. Lichtwellenleiter mit Kern/Mantel-Struktur, dessen Kern aus einem Polymer mit einem Brechungsindex n(K) und dessen Mantel aus einem Polymer mit einem Brechungsindex n(M) besteht, und n(K)/n(M) > 1,01 ist, wobei der Kern aus einem Polycarbonat oder aus einem Polymer besteht, welches Einheiten enthält, die sich von einem Acrylat, einem Methacrylat oder einem Fluoracrylat ableiten, und der Mantel aus einem Polymer besteht, welches Einheiten von Vinylidenfluorid, Tetrafluorethylen und Hexafluorpropylen enthält, dadurch gekennzeichnet, daß die Polymereinheiten des Mantels sich, jeweils bezogen auf das Polymer, zu 30 bis 50 Gew% vom Vinylidenfluorid, zu 25 bis 55 Gew% vom Tetrafluorethylen und zu 15 bis 25 Gew% vom Hexafluorpropylen ableiten.

2. Lichtwellenleiter nach Anspruch 1, dadurch gekennzeichnet, daß die Dämpfungswerte des Lichtwellenleiters 1290 dB/km bei 650 nm und 70°C nicht überschreiten.

3. Lichtwellenleiter nach Anspruch 1 oder 2, dadurch gekennzeichnet, daß der Mantel aus einem Polymer besteht, welches Einheiten enthält, die sich, jeweils bezogen auf das Polymer, zu

   35 bis bis 45 Gew.-% vom Vinylidenfluorid, zu
   35 bis 45 Gew.-% vom Tetrafluorethylen und zu
   17 bis 22 Gew.-% vom Hexafluorpropylen ableiten.

4. Lichtwellenleiter nach Anspruch 1 oder 2, dadurch gekennzeichnet, daß der Kern aus einem Polymer besteht, welches Einheiten enthält, die sich von α-Fluoracrylaten, Acrylaten und Methacrylaten ableiten.

5. Lichtwellenleiter nach Anspruch 1 oder 2, dadurch gekennzeichnet, daß der Kern aus einem Polycarbonat besteht.

6. Lichtwellenleiter nach Anspruch 1 oder 2, dadurch gekennzeichnet, daß das Vinylidenfluorid-Tetrafluorethylen-Hexafluorpropylen-Copolymer im Mantel des Lichtwellenleiters vernetzt ist.

7. Verfahren zur Herstellung eines Lichiwellenleiters mit Kern/Mantel-Struktur, dessen Kern aus einem Polymer mit einem Brechungsindex n(K) und dessen Mantel aus einem Polymer mit einem Brechungsindex n(M) besteht, und n(K)/n(M) > 1,01 ist, durch Extrusion des Kerns und Umgeben des Kerns mit einem Mantel, wobei der Kern aus einem Polycarbonat oder aus einem Polymer extrudiert wird, welches Einheiten enthält, die sich von einem Acrylat, einem Methacrylat oder einem Fluoracrylat ableiten, und mit einem Mantel aus einem Polymer umgeben wird, welches Einheiten von Vinylidenfluorid, Tetrafluorethylen und Hexafluorpropylen enthält, dadurch gekennzeichnet, daß die Polymereinheiten des Mantels sich, jeweils bezogen auf das Polymer,

zu 30 bis 50 Gew.-% vom Vinylidenfluorid, zu
25 bis 55 Gew.-% vom Tetrafluorethylen und zu
15 bis 25 Gew.-% vom Hexafluorpropylen ableiten.

8. Verfahren nach Anspruch 7, dadurch gekennzeichnet, daß Kern und Mantel durch Coextrusion gleichzeitig hergestellt werden.

9. Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht,

und n(K)/n(M) > 1,01 ist, wobei der Kern aus einem Polycarbonat oder aus einem Polymer besteht, welches Einheiten enthält, die sich von einem Acrylat, einem Methacrylat oder einem Fluoracrylat ableiten, und der Mantel aus einem Polymer besteht, welches Einheiten von Vinylidenfluorid, Tetrafluorethylen und Hexafluorpropylen enthält, dadurch gekennzeichnet,
daß zunächst der Mantel als Schlauch extrudiert wird und danach dieser Schlauch zur Bildung des Kerns mit einem niedrigviskosen transparenten Präpolymer, welches Einheiten enthält, die sich vom Acrylat, vom Methacrylat oder vom Fluoracrylat oder von einem polymerisierbaren Carbonat ableiten, gefüllt und die Füllung auspolymerisiert wird, und daß die Polymereinheiten des Mantels sich, jeweils bezogen auf das Polymer, zu 30 bis 50 Gew% vom Vinylidenfluorid, zu 25 bis 55 Gew% vom Tetrafluorethylen und zu 15 bis 25 Gew% vom Hexafluorpropylen ableiten.

10. Verwendung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, und n(K)/n(M) > 1,01 ist, wobei der Kern aus einem Polycarbonat oder aus einem Polymer besteht, welches Einheiten enthält, die sich von einem Acrylat, einem Methacryiat oder einem Fluoracrylat ableiten, und der Mantel aus einem Polymer besteht, welches Einheiten von Vinylidenfluorid, Tetrafluorethylen und Hexafluorpropylen enthält, zur Übertragung von Lichtsignalen in Datenverarbeitungsanlagen, dadurch gekennzeichnet, daß die Polymereinheiten des Mantels sich, jeweils bezogen auf das Polymer, zu 30 bis 50 Gew% vom Vinylidenfluorid, zu 25 bis 55 Gew% vom Tetrafluorethylen und zu 15 bis 25 Gew% vom Hexafluorpropylen ableiten.

## Claims

1. An optical waveguide having a core/sheath structure whose core comprises a polymer with a refractive index n(C) and whose sheath comprises a polymer with a refractive index n(S), and n(C)/n(S) is > 1.01, where the core comprises a polycarbonate or a polymer which contains units which are derived from an acrylate, from a methacrylate or from a fluoroacrylate, and the sheath comprises a polymer which contains units of vinylidene fluoride, tetrafluoroethylene and hexafluoropropylene, wherein the polymer units of the sheath, based in each case on the polymer, are derived from 30 to 50% by weight of vinylidene fluoride, from 25 to 55% by weight of tetrafluoroethylene and from 15 to 25% by weight of hexafluoropropylene.

2. The optical waveguide as claimed in claim 1, wherein the attenuation values of the optical waveguide do not exceed 1290 dB/km at 650 nm and 70°C.

3. The optical waveguide as claimed in claim 1 or 2, wherein the sheath comprises a polymer which contains units which, based in each case on the polymer, are derived from 35 to 45% by weight of vinylidene fluoride, from 35 to 45% by weight of tetrafluoroethylene and from 17 to 22% by weight of hexafluoropropylene.

4. The optical waveguide as claimed in claim 1 or 2, wherein the core comprises a polymer which contains units which are derived from α-fluoroacrylates, acrylates and methacrylates.

5. The optical waveguide as claimed in claim 1 or 2, wherein the core comprises a polycarbonate.

6. The optical waveguide as claimed in claim 1 or 2, wherein the vinylidene fluoride-tetrafluoroethylene-hexafluoropropylene copolymer in the sheath of the optical waveguide is crosslinked.

8

7. A process for producing an optical waveguide having a core/sheath structure whose core comprises a polymer with a refractive index n(C) and whose sheath comprises a polymer with a refractive index n(S), and n(C)/n(S) is > 1.01, by extruding the core and encasing the core with a sheath, where the core is extruded from a polycarbonate or from a polymer which contains units which are derived from an acrylate, from a methacrylate or from a fluoroacrylate, and is encased with a sheath made from a polymer which contains units of vinylidene fluoride, tetrafluoroethylene and hexafluoropropylene, wherein the polymer units of the sheath, based in each case on the polymer, are derived

from 30 to 50% by weight of vinylidene fluoride,
from 25 to 55% by weight of tetrafluoroethylene and
from 15 to 25% by weight of hexafluoropropylene.

8. The process as claimed in claim 7, wherein the core and the sheath are simultaneously produced by coextrusion.

9. A process for producing an optical waveguide having a core/sheath structure whose core comprises a polymer with a refractive index n(C) and whose sheath comprises a polymer with a refractive index n(S), and n(C)/n(S) is > 1.01, where the core comprises a polycarbonate or a polymer which contains units which are derived from an acrylate, from a methacrylate or from a fluoroacrylate, and the sheath comprises a polymer which contains units of vinylidene fluoride, tetrafluoroethylene and hexafluoropropylene, wherein initially the sheath is extruded as a tube and subsequently this tube is filled, to form the core, with a low-viscosity transparent prepolymer which contains units which are derived from acrylate, from methacrylate or from fluoroacrylate or from a polymerizable carbonate, and the filling is polymerized and the polymer units of the sheath, based in each case on the polymer, are derived from 30 to 50% by weight of vinylidene fluoride, from 25 to 55% by weight of tetrafluoroethylene and from 15 to 25% by weight of hexafluoropropylene.

10. The use of an optical waveguide having a core/sheath structure whose core comprises a polymer with a refractive index n(C) and whose sheath comprises a polymer with a refractive index n(S), and n(C)/n(S) is > 1.01, where the core comprises a polycarbonate or a polymer which contains units which are derived from an acrylate, from a methacrylate or from a fluoroacrylate, and the sheath comprises a polymer which contains units of vinylidene fluoride, tetrafluoroethylene and hexafluoropropylene, for transmitting light signals in data processing installations, wherein the polymer units of the sheath, based in each case on the polymer, are derived from 30 to 50% by weight of vinylidene fluoride, from 25 to 55% by weight of tetrafluoroethylene and from 15 to 25% by weight of hexafluoropropylene.

**Revendications**

1. Guide d'ondes lumineuses comportant une structure âme/gaine, dont l'âme est constituée par un polymère possédant un indice de réfraction n(K) et dont la gaine est constituée par un polymère possédant un indice de réfraction n(M), et n(K)/n(M) > 1,01, l'âme étant formée d'un polycarbonate ou d'un polymère, lequel contient des unités qui sont dérivées d'un acrylate, d'un méthacrylate ou d'un fluoroacrylate, et la gaine étant constituée d'un polymère, lequel contient des unités de fluorure de vinylidène, de tétrafluoroéthylène et d'hexafluoropropylène, caractérisé en ce que les unités du polymère de la gaine sont dérivées, d'une manière rapportée respectivement au polymère, pour 30 à 50 % en poids du fluorure de vinylidène, pour 25 à 55 % en poids du tétrafluoroéthylène et pour 15 à 25 % en poids de l'hexafluoropropylène.

2. Guide d'ondes lumineuses selon la revendication 1, caractérisé en ce que les valeurs d'affaiblissement du guide d'ondes lumineuses ne dépassent pas 1290 dB/km pour 650 nm et à 70°C.

3. Guide d'ondes lumineuses selon la revendication 1 ou 2, caractérisé en ce que la gaine est constituée par un polymère, lequel contient des unités qui sont dérivées, d'une manière rapportée respectivement au polymère,

pour 35 à 45 % en poids du fluorure de vinylidène,
pour 35 à 45 % en poids du tétrafluoroéthylène et
pour 17 à 22 % en poids de l'exafluoropropylène.

4. Guide d'ondes lumineuses selon la revendication 1 ou 2, caractérisé en ce que l'âme est constituée par un polymère, lequel contient des unités qui sont dérivées d'$\alpha$-fluoroacrylates, d'acrylates et de méthacrylates.

**5.** Guide d'ondes lumineuses selon la revendication 1 ou 2, caractérisé en ce que l'âme est constituée par un polycarbonate.

**6.** Guide d'ondes lumineuses selon la revendication 1 ou 2, caractérisé en ce que le copolymère fluorure de vinylidène-tétrafluoroéthylène-hexafluoropropylène dans la gaine du guide d'ondes lumineuses est réticulé.

**7.** Procédé pour fabriquer un guide d'ondes lumineuses comportant une structure âme/gaine, dont l'âme est constituée par un polymère possédant un indice de réfraction n(K) et dont la gaine est constituée par un polymère possédant un indice de réfraction n (M) , et n(K)/n(M) > 1,01, par extrusion de l'âme et enrobage de l'âme par une gaine, l'âme étant formée par extrusion d'un polycarbonate ou d'un polymère, lequel contient des unités qui sont dérivées d'un acrylate, d'un méthacrylate ou d'un fluoroacrylate, et étant entourée par une gaine formée d'un polymère, lequel contient des unités de fluorure de vinylidène, de tétrafluoroéthylène et d'hexafluoropropylène, caractérisé en ce que les unités de polymère de la gaine sont dérivées, d'une manière rapportée respectivement au polymère,

pour 30 à 50 % en poids du fluorure de vinylidène,
pour 25 à 55 % en poids du tétrafluoroéthylène et
pour 15 à 25 % en poids de l'hexafluoropropylène.

**8.** Procédé selon la revendication 7, caractérisé en ce que l'âme et la gaine sont fabriquées simultanément par coextrusion.

**9.** Procédé pour fabriquer un guide d'ondes lumineuses comportant une structure âme/gaine, dont l'âme est constituée par un polymère possédant un indice de réfraction n(K) et dont la gaine est constituée par un polymère possédant un indice de réfraction n(M), et n(K)/n(M) > 1,01, l'âme étant formée d'un polycarbonate ou d'un polymère, lequel contient des unités qui sont dérivées d'un acrylate, d'un méthacrylate ou d'un fluoroacrylate, et la gaine étant formée d'un polymère, lequel contient des unités de fluorure de vinylidène, de tétrafluoroéthylène et d'hexafluoropropylène, caractérisé en ce qu'on extrude tout d'abord la gaine sous la forme d'un tuyau et ensuite on remplit cette gaine pour former l'âme, avec un prépolymère transparent faiblement visqueux, lequel contient des unités qui sont dérivées de l'acrylate, du méthacrylate ou du fluoroacrylate, ou d'un carbonate polymérisable, et on polymérise la charge de remplissage et en ce que les unités du polymère de la gaine sont dérivées, d'une manière rapportée respectivement au polymère, pour 30 à 50 % en poids du fluorure de vinylidène, pour 25 à 55 % en poids du tétrafluoroéthylène et pour 15 à 25 % en poids de l'hexafluoropropylène.

**10.** Utilisation d'un guide d'ondes lumineuses comportant une structure âme/gaine, dont l'âme est constituée par un polymère possédant un indice de réfraction n(K) et dont la gaine est constituée par un polymère possédant un indice de réfraction n (M) , et n(K)/n(M) > 1,01, l'âme étant formée d'un polycarbonate ou d'un polymère, lequel contient des unités qui sont dérivées d'un acrylate, d'un méthacrylate ou d'un fluoroacrylate, et la gaine étant formée d'un polymère, lequel contient des unités de fluorure de vinylidène, de tétrafluoroéthylène et d'hexafluoropropylène, pour la transmission de signaux lumineux dans des installations de traitement de données, caractérisée en ce que les unités de polymère de la gaine sont dérivées, d'une manière rapportée respectivement au polymère, pour 30 à 50 % en poids du fluorure de vinylidène, pour 25 à 55 % en poids du tétrafluoroéthylène et pour 15 à 25 % en poids de l'hexafluoroprolylène.